# EUROPÄISCHE PATENTSCHRIFT

(11) **EP 3 759 958 B1**
(45) Veröffentlichungstag und Bekanntmachung des Hinweises auf die Patenterteilung: **09.03.2022**
(21) Anmeldenummer: 19720388.8
(22) Anmeldetag: 08.04.2019
(51) Int. Cl.: H04W 12/04, H04L 29/06, H04W 12/02

(54) **VERFAHREN, VORRICHTUNG UND COMPUTERPROGRAMMPRODUKT ZUR ÜBERWACHUNG EINER VERSCHLÜSSELTEN VERBINDUNG IN EINEM NETZWERK**
METHOD, APPARATUS AND COMPUTER PROGRAM PRODUCT FOR MONITORING OF AN ENCRYPTED CONNECTION IN A NETWORK
MÉTHODE, APPAREIL ET PRODUIT-PROGRAMME INFORMATIQUE POUR LA SURVEILLANCE D'UNE LIAISON CHIFFRÉE DANS UN RÉSEAU

(30) Priorität: 10.04.2018 EP 18166542
(43) Veröffentlichungstag der Anmeldung: 06.01.2021
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2019/058751
(87) Internationale Veröffentlichungsnummer: WO 2019/197306

(56) Entgegenhaltungen:
- US-A1- 2008 043 686
- US-A1- 2017 310 486
- "3rd Generation Partnership Project; Technical Specification Group Services and System Aspects; 3G security; Lawful interception architecture and functions (Release 15)", 3GPP STANDARD; TECHNICAL SPECIFICATION; 3GPP TS 33.107, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. SA WG3, Nr. V15.1.0, 28. März 2018 (2018-03-28), Seiten 1-356, XP051450676,

## Beschreibung

Die Erfindung betrifft ein Verfahren, eine Anordnung, eine Zwischenvorrichtung, eine Überwachungsvorrichtung, sowie ein Computerprogrammprodukt zur Überwachung einer verschlüsselten Verbindung zwischen einem Client und einem Zugangspunkt in einem Netzwerk.

Über Kommunikationsnetze, insbesondere Datennetzwerke in industriellen Anlagen und Automatisierungssystemen werden oftmals sensible Steuerungs- und Überwachungsdaten übertragen.

Um diese bei der Übertragung zu schützen, wird beispielsweise ein Sicherheitsprotokoll, wie beispielsweise eine sichere Medienzugriffssteuerung MACsec oder ein sicheres Internetprotokoll IPsec/IKEv2 oder insbesondere ein Transportschicht-Sicherheitsprotokoll TLS oder auch ein Datagramm-Transportschicht-Sicherheitsprotokoll DTLS, verwendet. Dabei wird die Authentizität vom Kommunikationspartner überprüft und abhängig von der Konfiguration des Protokolls eine Manipulation und/oder ein Abhören der Kommunikationsverbindung verhindert. Dazu wird meist beim Verbindungsaufbau kryptographisches Schlüsselmaterial, insbesondere ein Sitzungsschlüssel, und eine Chiffriermethode, auch als Cipher Suite bezeichnet, ausgehandelt, mit denen die übermittelten Daten integritätsgeschützt und/oder verschlüsselt werden.

Andererseits besteht jedoch auch die Anforderung, das Kommunikationsnetz zu überwachen, um beispielsweise eine Fehlfunktion oder eine fehlerhafte Administration diagnostizieren zu können. Auch besteht in manchen Anwendungen die Anforderung, Steuerungskommunikation in einem "Black Box Recorder" beziehungsweise "Juridical Recorder" aufzuzeichnen, um im Fall eines Unfalls den Schadenshergang aufklären zu können. Auch kann die Anforderung bestehen, den Ablauf eines Produktionsvorgangs zu dokumentieren oder um netzwerkbasierte Angriffe auf ein Automatisierungssystem zu erkennen. Dabei kann es erforderlich sein, eine verschlüsselte Datenkommunikation zu entschlüsseln bzw. kryptographische Prüfsummen einer integritätsgeschützten Datenkommunikation zu überprüfen. Somit besteht insbesondere in industriellen Automatisierungssystemen und Steuerungsanlagen ein Bedarf, kryptographisch geschützte und insbesondere verschlüsselte Kommunikationsverbindungen zu überwachen.

Es sind allgemein Schlüsseloffenbarungsfunktionen, auch als Key Disclosure bezeichnet, bekannt. Dabei stellt ein Knoten einen Verschlüsselungsschlüssel einer dritten Partei bereit, so dass diese den Datenverkehr entschlüsseln kann. So ist beispielsweise ein Multi-Context-Transportschicht-Sicherungsprotokoll mcTLS bekannt. Dabei wird beim Verbindungsaufbau mit Hilfe des TLS-Protokolls das Vorhandensein von einem oder mehreren Zwischenknoten den Kommunikationspartnern signalisiert. Dabei wird zwischen den Kommunikationspartnern vereinbartes Sitzungsschlüsselmaterial an den oder die Zwischenknoten bereitgestellt. Das Multi-Context-TLS-Protokoll ist eine Erweiterung des TLS-Protokolls gemäß dem IETF RFC 5246 und beispielsweise im Internet unter der Adresse http://mctls.org/documentation.html.

Weiterhin ist ein Transportschicht-Sicherheitsprotokoll mit einer Rotier-und-Freigabe-Funktion TLS-RaR bekannt, bei dem eine separate Verbindung von einem Kommunikationspartner zu einem Schlüsselveröffentlichungsserver aufgebaut wird. Hierbei wird der Schlüssel der letzten Kommunikationsperiode nach einer Schlüsselaktualisierung auf der Kommunikationsverbindung zwischen den beiden Kommunikationspartnern an den Schlüsselveröffentlichungsserver gesendet und somit eine verzögerte Überwachung des Datenverkehrs auf der Kommunikationsverbindung ermöglicht. Ein TLS-Protokoll mit Rotier- und Freigabefunktion TLS-RaR wird beispielsweise im Internet unter der Adresse:
https://forum.stanford.edu/events/2016/slides/iot/Judson.pdf beschrieben.

Weiterhin ist ein Transportschicht-Sicherheitsprotokoll mit einer Visibilitätserweiterung TLS VE bekannt. Diese Erweiterung kann von den Kommunikationspartnern, das heißt einem TLS-Client und einem TLS-Server, dazu genutzt werden, um explizit Zugriff auf einen Sitzungskontext der TLS-Verbindung zu geben und dadurch einen autorisierten Knoten eine Überwachung der TLS Verbindung zu ermöglichen. Das TLS-Protokoll mit Visibilitätserweiterung wird von der IETF spezifiziert und ist beispielsweise unter der Adresse https://tools.ietf.org/html/draft-rhrd-tls-tls13-visibility-00 beschrieben.

Es ist ein erweiterbares Authentifizierungsprotokoll EAP bekannt, mit dem sich ein Teilnehmer gegenüber einem Netzwerk authentisiert und vorzugsweise auch das Netzwerk gegenüber dem Teilnehmer. Über das EAP-Protokoll können unterschiedliche Authentisierungsmethoden übertragen werden. Ein erweiterbares Authentifizierungsprotokoll für ein Transportschicht-Sicherheits-Authentisierungsprotokoll EAP-TLS ist von der Internet Engineering Task Force IETF als Request for Comments RFC 5216 spezifiziert. Neben der Authentifizierung der Teilnehmer können über das EAP-TLS-Protokoll auch ein oder mehrere Sicherheitsinformationen, wie beispielsweise Schlüssel für die Absicherung einer Netzzugangskommunikation, ausgehandelt werden. Dies erfolgt typischerweise zwischen einem Kommunikationsteilnehmer und einem Authentisierungsserver, beispielsweise einem RADIUS/DIAMETER-Server.

In industriellen Anlagen werden vermehrt drahtlose Übertragungstechnologien wie beispielsweise WLAN gemäß einem IEEE 802.11 Standard oder einem WiMAX-Forum Standard und zellulärer Mobilfunk gemäß einem Long Term Evolution LTE- oder 5G-Standard des 3te Generations Partnerschaftsprojekts 3GPP zur Bereitstellung eines drahtlosen Netzwerks verwendet. Ebenso werden auch drahtgebundene Übertragungstechnologien, insbesondere Ethernet oder Profinet, verwendet.

Die US 2008/043686 A1 beschreibt ein Verfahren zur Erkennung von Angriffen in einem schnurlosen Datenkommunikationsnetzwerk. Dazu wird ein Netzzustand aus dem überwachten Schnurlosverkehr abgeleitet. Vertrauenswürdige Informationen zum Zustand des drahtlosen Netzwerks werden beispielsweise von einem Authentisierungsserver bereitgestellt. Bei der vertrauenswürdigen Information handelt es sich beispielsweise um ein zwischen Authentisierungsserver und einer Mobilstation ausgehandelten Typ eines Erweitertes Authentisierungsprotokolls (EAP), einem Zustand der Mobilstation oder EAP-Typ spezifische Parameter.

Die bekannten Verfahren zur Schlüsseloffenbarung erfordern spezielle Netzwerkprotokolle und Netzwerkschnittstellen und sind somit nur in speziell dafür vorbereiteten Netzwerken anwendbar.

Es ist somit die Aufgabe der vorliegenden Erfindung, eine verschlüsselte Kommunikationsverbindung zwischen einem Gerät oder allgemein Client und einem Netzwerk, die insbesondere eine verschlüsselte Verbindung aufweist, ohne eine spezielle Anpassung der Netzwerkprotokolle und Netzwerkschnittstellen zu überwachen.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur Überwachung einer verschlüsselten Verbindung zwischen einem Client und einem Zugangspunkt in einem Netzwerk, wobei
- ein Erweiterbares Authentifizierungsprotokoll EAP für eine Zugangsauthentifizierung des Clients zum Netzwerk bei einem Authentifizierungsserver verwendet wird, und
- innerhalb des Erweiterbaren Authentifizierungsprotokolls ein Transportschicht-Sicherheits-Protokoll mit Schlüsseloffenbarungsfunktion (EAP-kdTLS) ausgeführt wird, bei dem eine Sicherheitsinformation zum kryptographischen Schutz der Verbindung einer Zwischenvorrichtung bereitgestellt und von der Zwischenvorrichtung an eine Überwachungsvorrichtung zur Überwachung der Verbindung übermittelt wird.

Dies hat den Vorteil, dass lediglich durch die Verwendung eines speziellen Authentifizierungsprotokolls über ein allgemein von einem Gerät und einem Authentifizierungsserver unterstütztes erweiterbares Authentifizierungsprotokoll EAP ein Mithören der verschlüsselten Kommunikation auf der Verbindung, ermöglicht wird, wobei die mitgehörten Daten im Klartext durch die Zwischeneinrichtung analysiert werden können. Komponenten eines Netzwerks, beispielsweise gemäß einem WLAN oder WiMAX oder 5G-Standard oder 802.1X/MACsec müssen nicht angepasst werden, wenn sie eine Netzwerkzugangsauthentifizierung gemäß einem Erweiterbaren Authentifizierungsprotokoll unterstützen. Das Erweiterbare Authentifizierungsprotokoll wird in vielen Netzwerken, insbesondere auch Funknetzwerken, bereits genutzt und ist somit im Client und im Authentifizierungsserver verfügbar. Somit kann die Zugangsauthentifizierung basierend auf dem Erweiterbaren Authentifizierungsprotokoll und dem darin ausgeführten Transportschicht-Sicherheitsprotokoll mit Schlüsseloffenbarungsfunktion (EAP-kdTLS) über die Überwachungsvorrichtung von einem Dritten mitgehört werden. Dadurch kann unabhängig von einer Schlüsselverteilung gemäß beispielsweise einem RADIUS/DIAMETER-Spezifikation der nachfolgende Nutzdatenverkehr auf der Verbindung mitgehört werden. Durch die Überwachung der Zugangsauthentifizierung des Clients beim Authentifizierungsserver wird die Sicherheitsinformation, insbesondere Schlüsselmaterial, ermittelt, mit dem nachfolgende Schlüsselvereinbarungsnachrichten für eine Nutzdatenverbindung auf der Verbindung kryptographisch geschützt werden. Somit kann wiederum ein Verkehrs- Schlüsselmaterial, beispielsweise Sitzungsschlüssel, ermittelt werden und somit der verschlüsselte Nutzdatenverkehr auf der Verbindung entschlüsselt und überwacht werden.

In einer vorteilhaften Ausführungsform ist ein Transportschicht-Sicherheits-Protokoll TLS mit Schlüsseloffenbarungsfunktion ein Multi-Context-TLS-Protokoll oder ein TLS-Protokoll mit Visibilitätserweiterung oder ein TLS-Protokoll mit Rotier- und Freigabefunktion.

Diese TLS-Protokolle mit Schlüsseloffenbarungsfunktion haben den Vorteil, bereits verfügbar zu sein. Somit können der Client und der Authentifizierungsserver ohne signifikanten zusätzlichen Entwicklungsaufwand mit dieser Funktion ausgestattet werden.

In einer vorteilhaften Ausführungsform wird die Sicherheitsinformation in der Zwischenvorrichtung überprüft und an den Zugangspunkt weitergeleitet.

In einer vorteilhaften Ausführungsform wird die Sicherheitsinformation selbst oder eine aus der Sicherheitsinformation abgeleitete zweite Sicherheitsinformation von der Zwischenvorrichtung ermittelt und an die Überwachungsvorrichtung zur Überwachung der Verbindung bereitgestellt.

Wird aus der Sicherheitsinformation über eine Ableitungsfunktion ein abgeleiteter kryptographischer Schlüssel ermittelt, so muss die dafür verwendete Ableitungsfunktion derjenigen Ableitungsfunktion im Zugangspunkt entsprechen, die dort für die Ableitung des kryptographischen Schlüssels verwendet wird. Diese beiden abgeleiteten Schlüssel müssen einander entsprechen. Durch die Überprüfung in der Zwischenvorrichtung kann dies sichergestellt werden. Dadurch kann überprüft werden, dass tatsächlich derjenige abgeleitete Schlüssel für den Schutz der Kommunikation verwendet wird, der durch die Sicherheitsinformation offenbart wird. Die ermittelte Sicherheitsinformation kann insbesondere ein Meistersitzungsschlüssel MSK, ein erweiterter Meistersitzungsschlüssel EMSK, ein Anwendungsmeistersitzungsschlüssel AMSK sein. Ein aus der Sicherheitsinformation abgeleiteter kryptographischer Schlüssel kann somit ein von den genannten Sitzungsschlüsseln abhängig gebildeter Schlüssel sein.

In einer vorteilhaften Ausführungsform wird die Sicherheitsinformation nur an eine vom Authentifizierungsserver authentisierte und/oder autorisierte Überwachungsvorrichtung bereitgestellt.

Dies hat den Vorteil, dass lediglich überprüfte und autorisierte Überwachungsvorrichtungen die Sicherheitsinformationen erhalten.

In einer vorteilhaften Ausführungsform wird die Sicherheitsinformation von der Zwischenvorrichtung zeitlich verzögert an die Überwachungsvorrichtung bereitgestellt.

Dies hat den Vorteil, dass besonders sicherheitskritische Daten auf der Verbindung nicht sofort beziehungsweise nicht in Echtzeit ermittelt werden können, sondern durch eine Zeitverzögerung die Ermittlung sicherheitskritischer Daten solange verzögert werden kann, bis kein Schaden daraus entstehen kann.

In einer vorteilhaften Ausführungsform wird die Sicherheitsinformation über eine kryptographisch geschützte Verbindung von der Zwischenvorrichtung an die Überwachungsvorrichtung bereitgestellt.

Dies hat den Vorteil, dass die Sicherheitsinformation nicht von einem unbefugten Dritten, der sich als Überwachungsvorrichtung ausgibt, empfangen werden kann.

In einer vorteilhaften Ausführungsform wird ein öffentlicher Schlüssel des Clients und/oder des Authentifizierungsservers, der bei der Zugangsauthentifizierung zum Netzwerk validiert wurde, zur Verschlüsselung und zur Integrationsüberwachung der kryptographisch geschützten Verbindung zwischen der Zwischenvorrichtung und der Überwachungsvorrichtung verwendet.

Dies hat den Vorteil, dass zum Schutz der Übertragung der Sicherheitsinformation kein zusätzlicher Schlüssel verwaltet werden muss.

In einer vorteilhaften Ausführungsform werden über die Verbindung geschützt übertragene Schlüsselverteilungsnachrichten und/oder Schlüsselvereinbarungsnachrichten mittels der Sicherheitsinformation von der Überwachungsvorrichtung entschlüsselt und darin enthaltene Verkehrssitzungsschlüssel, die zum kryptographischen Schutz von Nutzdaten verwendet werden, ermittelt.

In einer vorteilhaften Ausführungsform werden mit dem Verkehrssitzungsschlüssel entschlüsselte Nutzdaten gegenüber einer Überwachungsrichtlinie überprüft und bei Verletzung der Überwachungsrichtlinie ein Alarm von der Überwachungsvorrichtung bereitgestellt oder weitere Maßnahmen, entsprechend einer Sicherheitsrichtlinie durchgeführt.

Dies hat den Vorteil, dass aktiv die über die Verbindung übertragenen Nutzdaten analysiert und über einen Alarm weitere Maßnahmen veranlasst werden können.

Gemäß einem zweiten Aspekt betrifft die Erfindung eine Anordnung zur Überwachung einer verschlüsselten Verbindung zwischen einem Client und einem Zugangspunkt in einem Netzwerk, umfassend
- einen Client und einen Authentifizierungsserver, die derart ausgebildet sind ein Erweiterbares Authentifizierungsprotokoll EAP zur Zugangsauthentifizierung des Clients zum Netzwerk zu verwenden und innerhalb des Erweiterbaren Authentifizierungsprotokolls EAP ein Transportschicht-Sicherheits TLS Protokoll mit Schlüsseloffenbarungsfunktion auszuführen,
- eine Zwischenvorrichtung, die derart ausgebildet ist eine Sicherheitsinformation von dem Authentifizierungsserver zu empfangen, und
- eine Überwachungsvorrichtung, die derart ausgebildet ist die Sicherheitsinformation von der Zwischenvorrichtung zur Überwachung der Verbindung zu empfangen.

Die erfindungsgemäße Anordnung ermöglicht insbesondere bei einem WLAN, WiMAX oder bei einem 5G-Mobilfunknetz lediglich durch die Verwendung des erweiterbaren Authentifizierungsprotokolls mit dem Transportschicht-Sicherheitsprotokoll mit Schlüsseloffenbarungsfunktion Nutzdaten, die verschlüsselt über die Verbindung übertragen werden, zu entschlüsseln und somit zu überwachen. Dabei ist es nicht erforderlich, die Mobilfunk- beziehungsweise Schnurloskomponenten, wie beispielsweise den Zugangspunkt oder weitere Funkzugangsknoten eines schnurlosen Netzwerks, speziell für diesen Zweck anzupassen.

In einer vorteilhaften Ausführungsform ist zwischen der Zwischenvorrichtung und dem Authentifizierungsserver eine Vertrauensbeziehung ausgebildet.

Eine solche Vertrauensbeziehung kann beispielsweise durch das Betreiben der Zwischenvorrichtung und des Authentifizierungsservers durch einen gemeinsamen Betreiber gegeben sein, der beide Komponenten kontrolliert und ebenso eine Kommunikationsverbindung zwischen der Zwischenvorrichtung und dem Authentifizierungsserver kontrolliert und manipulationssicher betreibt. Eine Vertrauensbeziehung kann aber auch durch eine Authentifizierung der Zwischenvorrichtung bei dem Authentifizierungsserver oder eine gegenseitige Authentifizierung der Zwischenvorrichtung und des Authentifizierungsservers ausgebildet sein.

In einer vorteilhaften Ausführungsform ist die Zwischenvorrichtung als ein Authentifizierungsproxy ausgebildet, der mit dem Authentifizierungsserver einer ersten Netzwerkzone zugeordnet ist oder die Zwischenvorrichtung ist einer zweiten Netzwerkzone zugeordnet, die unterschiedlich von der ersten Netzwerkzone ist, der der Authentifizierungsserver zugeordnet ist.

Im Fall eines Authentifizierungsproxys ist üblicherweise eine Vertrauensbeziehung durch das Betreiben des Authentifizierungsproxys und des Authentifizierungsservers in einer gemeinsamen ersten Netzwerkzone gegeben, in der die Authentizität und Übertragung von Daten zwischen Authentifizierungsproxy und Authentifizierungsserver sichergestellt ist. Ist die Zwischenvorrichtung in einer zweiten Netzwerkzone, der Authentifizierungsserver aber in einer ersten Netzwerkzone ausgebildet, so ermöglicht dies einen von einem Netzwerkprovider der ersten Netzwerkzone unabhängigen Zugriff auf die ausgehandelte Sicherheitsinformation, die im Nachgang zum Schutz des Netzwerkzugangs genutzt wird.

Gemäß einem dritten Aspekt betrifft die Erfindung eine Zwischenvorrichtung zur Überwachung einer verschlüsselten Verbindung zwischen einem Client und einem Zugangspunkt in einem Netzwerk, umfassend
eine Prüfeinheit, die derart ausgebildet ist eine Sicherheitsinformation zu überprüfen und weiterzuleiten und eine Bereitstellungseinheit, die derart ausgebildet ist, die Sicherheitsinformation selbst oder ein aus der Sicherheitsinformation abgeleitete zweite Sicherheitsinformation zu ermitteln und zur Überwachung der Verbindung (102) bereitzustellen. Die Zwischenvorrichtung ist des weiteren derart ausgebildet, das beschriebene Verfahren durchzuführen.

Gemäß einem vierten Aspekt betrifft die Erfindung eine Überwachungsvorrichtung zur Überwachung einer verschlüsselten Verbindung zwischen einem Client und einem Zugangspunkt in einem Netzwerk, die derart ausgebildet ist, eine Sicherheitsinformation zu empfangen und mittels der Sicherheitsinformation über die Verbindung geschützt übertragene Schlüsselverteilungsnachrichten und/oder Schlüsselvereinbarungsnachrichten zu entschlüsseln und darin enthaltene Verkehrssitzungsschlüssel, die zum kryptographischen Schutz von Nutzdaten verwendet werden, zu ermitteln und zum Entschlüsseln der Nutzdaten zu verwenden.

Gemäß einem fünften Aspekt betrifft die Erfindung ein Computerprogrammprodukt, das direkt in den Speicher eines oder mehrerer digitaler Computer ladbar ist, umfassend Programmcodeteile, die dazu geeignet sind, die Schritte des Verfahrens durchzuführen.

Ausführungsbeispiele des erfindungsgemäßen Verfahrens und der erfindungsgemäßen Anordnung sind in den Zeichnungen beispielhaft dargestellt und werden anhand der nachfolgenden Beschreibung näher erläutert. Es zeigen:
- Figur 1: ein Ausführungsbeispiel einer erfindungsgemäßen Anordnung zur Überwachung einer verschlüsselten Verbindung zwischen einem Client und einem Zugangspunkt in einem Netzwerk in schematischer Darstellung;
- Figur 2: ein Ausführungsbeispiel einer erfindungsgemäßen Zwischenvorrichtung in Blockdarstellung;
- Figur 3: ein Ausführungsbeispiel einer erfindungsgemäßen Überwachungsvorrichtung in Blockdarstellung;
- Figur 4: eine Authentisierung in einem Netzwerk entsprechend dem Stand der Technik in Form eines Ablaufdiagramms;
- Figur 5: ein erstes Ausführungsbeispiel des erfindungsgemäßen Verfahrens in Form eines Ablaufdiagramms; und
- Figur 6: ein zweites Ausführungsbeispiel des erfindungsgemäßen Verfahrens in Form eines Ablaufdiagramms.

Einander entsprechende Teile sind in allen Figuren mit den gleichen Bezugszeichen versehen.

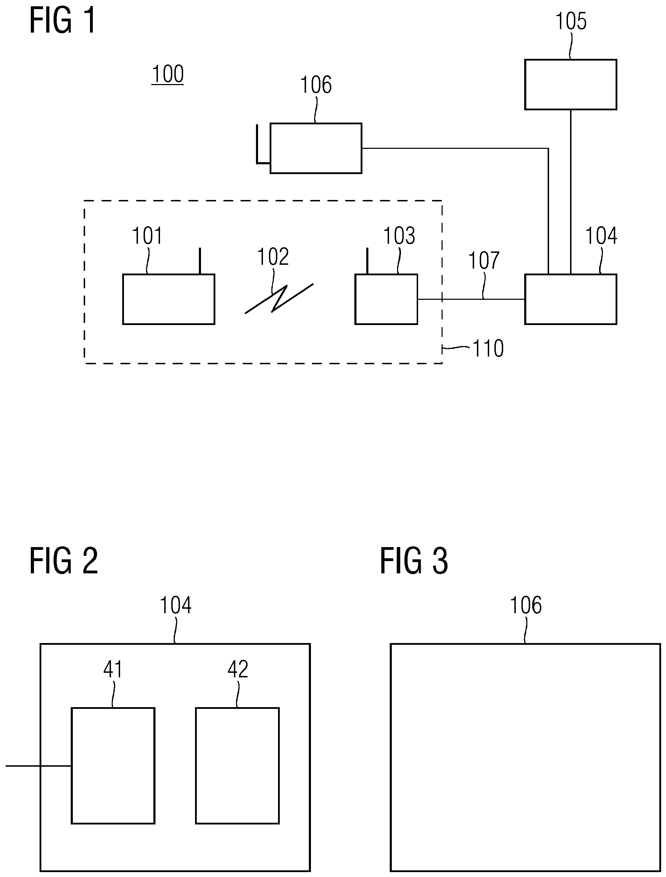

Figur 1 zeigt eine Anordnung zur Überwachung einer verschlüsselten Verbindung 102, insbesondere einer drahtlosen Verbindung, zwischen einem Client 101 und einem Zugangspunkt 103 in einem lokalen Netzwerk 110. Der Client 1 ist beispielsweise ein Gerät, das über das lokale Netzwerk 110 mit anderen Geräten, Steuer-, Diagnose- oder Überwachungsvorrichtungen kommuniziert. Das Gerät kann beispielsweise ein Feldgerät einer Automatisierungsanlage, eine Vorrichtung in einer Energieerzeugungs- oder Energieverteilungsanlage, aber auch eine Vorrichtung in einem Büronetz oder allgemein ein Teilnehmer eines Kommunikations- oder Datennetzwerks, in dem das lokale Netzwerk 110 ein Zugangsnetzwerk ausgebildet ist. Der Zugangspunkt 103 ist beispielsweise als ein Access Point gemäß einem WLAN Standard ausgebildet. Unter Verschlüsselung wird hierbei ein kryptographischer Schutz der Verbindung verstanden. Dabei kann die Vertraulichkeit und/oder Integrität der übertragenen Daten geschützt werden. Bei einer verschlüsselten Übertragung von Nutzdaten, z.B. Steuerdaten oder Sensordaten, können die Nutzdaten nur entschlüsselt werden, wenn der verwendete kryptographische Schlüssel vorliegt. Bei integritätsgeschützten Übertragung von Nutzdaten können die die Integrität schützenden kryptographischen Prüfsummen (Nachrichtenauthentisierungscode, Message Authentication Code) nur überprüft werden, wenn der verwendete kryptographische Schlüssel vorliegt.

Die Anordnung 100 umfasst des Weiteren einen Authentifizierungsserver 105, der derart ausgebildet ist, eine Zugangsauthentifizierung des Clients 101 beim lokalen Netzwerk durchzuführen. Eine Zwischenvorrichtung 104 ist dem Authentifizierungsserver 5 zugeordnet und mit dem Zugangspunkt 103 verbunden. Eine Überwachungsvorrichtung 106 ist mit der Zwischenvorrichtung 104 verbunden. Die Verbindungen zwischen dem Zugangspunkt 103 und der Zwischenvorrichtung 104 sowie der Zwischenvorrichtung 104 und dem Authentifizierungsserver 105 sowie dem Zugangspunkt 103 und der Überwachungseinheit 106 können eine direkte oder eine indirekte Verbindung mit Zwischenknoten sein. Die Verbindungen können als drahtgebundene oder drahtlose Verbindungen ausgebildet sein. Die Verbindung 102 zwischen dem Client 101 und dem Zugangspunkt 103 ist beispielsweise eine drahtlose Verbindung gemäß dem WLAN-Standard IEEE 802.11 des Instituts für Elektro- und Elektronik-Ingenieure ausgebildet. Die Verbindung 102 kann aber auch als drahtgebundene Verbindung, die beispielsweise über ein sicheres Media-Access Control-Protokoll nach IEEE 802.1ae (MACsec) ausgebildet ist, sein. Bei der Verbindung kann es sich auch um ein mobilfunkbasiertes Netzwerk handeln. Dazu kann z.B. eine 5G-Funkzugangstechnology (3GPP 5G New Radio) als WLAN-Funktechnologie in einem privaten Funknetzwerk verwendet werden, oder es kann ein virtuelles lokales Netzwerk über ein Mobilfunknetz realisiert werden (z.B. MulteFire, mobile virtual private LAN service, LAN support in 5G).

Zur Zugangsauthentifizierung des Clients 101 beim Authentifizierungsserver 105 wird ein erweiterbares Authentifizierungsprotokoll, im Weiteren kurz auch als EAP bezeichnet, verwendet, mit dem sich der Client 101 gegenüber dem Authentifizierungsserver authentifiziert. Das EAP-Protokoll wird dabei insbesondere als ein EAP-TLS-Protokoll mit einer Schlüsseloffenbarungsfunktion (EAP-kdTLS)verwendet. Neben der Authentifizierung des Clients 101 werden über dieses EAP-kdTLS-Protokoll ein oder mehrere Sicherheitsinformationen, insbesondere Sitzungsschlüssel für die Absicherung der Netzzugangskommunikation, beispielsweise zum Aufbau einer geschützten Nutzdatenverbindung über die Verbindung 102, ausgehandelt.

In Figur 2 ist ein Ausführungsbeispiel einer Zwischenvorrichtung 104 dargestellt. Diese umfasst eine Prüfeinheit 41, die derart ausgebildet ist, die Sicherheitsinformation zu überprüfen und weiterzuleiten. Die Zwischenvorrichtung umfasst des Weiteren eine Bereitstellungseinheit 42, die derart ausgebildet ist, die Sicherheitsinformation selbst oder eine aus der Sicherheitsinformation abgeleitete zweite Sicherheitsinformation zu ermitteln und zur Überwachung der Verbindung 102 bereitzustellen.

Figur 3 zeigt ein Ausführungsbeispiel einer Überwachungsvorrichtung 106. Die Überwachungsvorrichtung 106 ist derart ausgebildet, die Sicherheitsinformation zu empfangen und mittels der Sicherheitsinformation geschützt über die lokale Verbindung übertragene Schlüsselverteilungsnachrichten und/oder Schlüsselvereinbarungsnachrichten zu entschlüsseln und darin enthaltene Verkehrssitzungsschlüssel, die zum kryptographischen Schutz von Nutzdaten verwendet werden, zu ermitteln und zum Entschlüsseln der Nutzdaten bzw. zur Überprüfung von kryptographischen Prüfsummen der Nutzdaten zu verwenden.

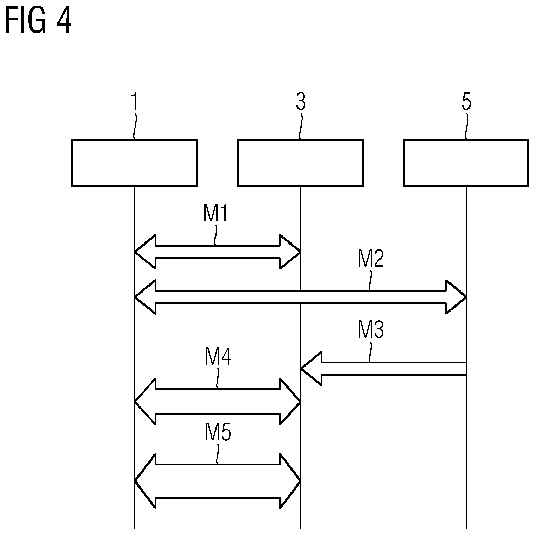

Figur 4 zeigt eine Authentifizierung eines Client 1 und einem Zugangspunkt 3 eines lokalen eine bei einem Authentisierungsserver 5 gemäß dem herkömmlichen EAP-TLS-Protokoll. In einem ersten Schritt M1 wird eine Übertragungsverbindung gemäß einer Schicht 3 eines ITU/ISO OSI-Modells zwischen dem Client 1 und dem Zugangspunkt 3 aufgebaut. Im Verfahrensschritt M2 authentifiziert sich der Client 1 über das EAP-TLS-Protokoll beim Authentifizierungsserver 5. Der Authentifizierungsserver 5 kann beispielsweise gemäß einem Radius- oder ein Diameterprotokoll gemäß dem IETF-Standard RFC 2865 bzw RFC 6733 arbeiten.

Nach einer erfolgreichen Authentifizierung des Clients 1 übermittelt der Authentifizierungsserver 5 Sicherheitsinformation zur kryptographisch gesicherten Übertragung von Daten auf der Verbindung zwischen dem Client 1 und dem Zugangspunkt 3, siehe M3.

Diese Sicherheitsinformation umfasst beispielsweise einen oder mehrere Schlüssel, beispielsweise einen Meistersitzungsschlüssel MSK oder einen erweiterten Meistersitzungsschlüssel EMSK. Die mindestens eine Sicherheitsinformation wird nun zur Verschlüsselung und/oder Überprüfung von Schlüsselverteil- und Schlüsselvereinbarungsnachrichten beispielsweise eines 4-Wege-Handshakes eines WLAN-Verbindungsaufbaus verwendet, siehe Verfahrensschritt M4. Dieser Nachrichtenaustausch ist somit verschlüsselt bzw. kryptographisch geschützt und von einem Dritten nicht auslesbar bzw. nicht manipulierbar. Bei dem Verbindungsaufbau im Schritt M4 werden nun Verkehrssitzungsschlüssel, im Englischen als Traffic Session Key TSK bezeichnet, ermittelt und im Verfahrensschritt M5 zum verschlüsselten und/oder integritätsgeschützten Datenaustausch von Nutzdaten verwendet.

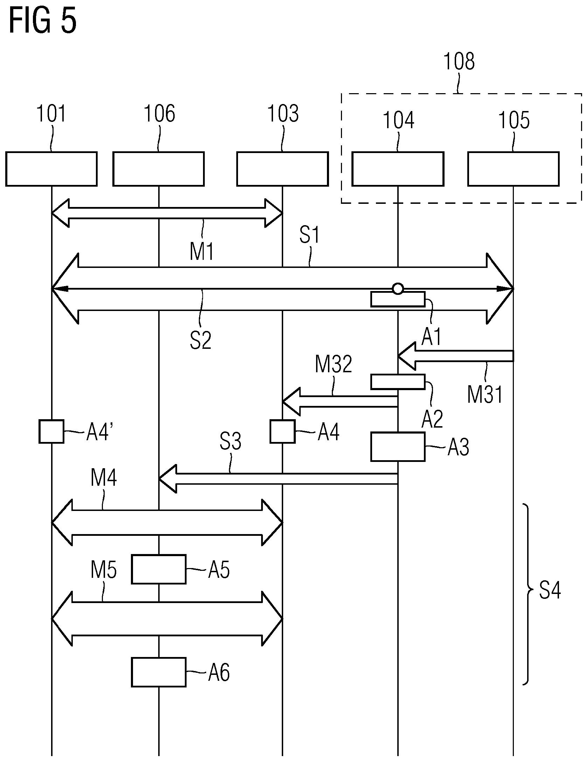

Figur 5 zeigt nun ein Ausführungsbeispiel des erfindungsgemäßen Verfahrens anhand eines schematischen Nachrichten-Ablaufdiagramms zwischen den Komponenten der in Figur 1 dargestellten Anordnung. Nach einem Aufbau einer Verbindung zwischen dem Client 101 und dem Zugangspunkt 103, siehe M1, wird nun ein erweiterbares Authentifizierungsprotokoll EAP, siehe S1, in einer Ausprägung für Transportschicht-Sicherheitsprotokolle mit Schlüsseloffenbarungsfunktion für die Zugangsauthentifizierung des Clients 101 zum Netzwerk zwischen dem Client 101 und dem Authentifizierungsserver 105 verwendet, siehe S2. Dabei wird die Sicherheitsinformation, die zur Absicherung der weiteren Netzzugangskommunikation M4 zwischen dem Client 101 und dem Zugangspunkt 103 verwendet wird und zwischen dem Client 101 und dem Authentifizierungsserver 105 ausgehandelt wurde, auch der Zwischenvorrichtung 104 bereitgestellt, siehe A1. Transportschicht-Sicherheitsprotokolle mit Schlüsseloffenbarungsfunktion werden nachfolgend auch abgekürzt als kdTLS-Protokolle bezeichnet. Als kdTLS-Protokoll kann beispielsweise das bereits genannte Multi-Context-TLS-Protokoll oder ein TLS-Protokoll mit Visibilitätserweiterung oder ein TLS-Protokoll mit Rotier-und Freigabefunktion sein. Bei jedem dieser kdTLS-Protokolle wird die zwischen dem Client 101 und dem Authentifizierungsserver 105 ausgehandelte Sicherheitsinformation der Zwischenvorrichtung 104 bereitgestellt. Bei der Sicherheitsinformation handelt es sich beispielsweise um einen Meistersitzungsschlüssel MSK oder einen erweiterten Meistersitzungsschlüssel EMSK.

Im Verfahrensschritt M31 empfängt die Zwischenvorrichtung 104 die Sicherheitsinformation vom Authentifizierungsserver 105.

Die Zwischenvorrichtung 104 überprüft die aus dem Erweiterbaren Authentifizierungsprotokolls für Transportschicht-Sicherheits-Protokoll mit Schlüsseloffenbarungsfunktion, kurz als EAP-kdTLS bezeichnet, ermittelte Sicherheitsinformation mit der vom Authentifizierungsserver 105 empfangenen Sicherheitsinformation, siehe A2. Die Sicherheitsinformation umfasst neben beispielsweise Schlüsselmaterial auch weitere Schlüssel- und Verbindungsparameter, die bei der Überprüfung abgeglichen werden. Die vom Authentifizierungsserver 105 empfangene Schlüsselinformation wird an den Zugangspunkt 103 weitergeleitet, siehe M32. Im Zugangspunkt 103 und im Client 101 wird aus der Sicherheitsinformation und den mitgelieferten Schlüssel- und Verbindungsparametern die tatsächlich für die weitere Kommunikation auf der Verbindung 102 verwendete Sicherheitsinformation erstellt, siehe A4, A4'. Die weitere Kommunikation zwischen dem Client 101 und dem Zugangspunkt 103 wird nun mit dieser Sicherheitsinformation verschlüsselt, siehe M4.

Parallel dazu ermittelt die Zwischenvorrichtung 104 die auf der Verbindung 102 verwendete Sicherheitsinformation, siehe A3. Die verwendete Sicherheitsinformation kann entweder die vom Authentifizierungsserver 105 empfangene Sicherheitsinformation selbst oder eine abhängig von den Schlüssel- und Verbindungsparametern aus der Sicherheitsinformation abgeleitete zweite Sicherheitsinformation sein. Die Zwischenvorrichtung 104 übermittelt die Sicherheitsinformation beziehungsweise die abgeleitete zweite Sicherheitsinformation an die Überwachungsvorrichtung 106, siehe S3.

Die Überwachungsvorrichtung 106 überwacht nun die Verbindung 102 zwischen dem Client 101 und dem Zugangspunkt 103, entschlüsselt bzw. überprüft mit der Sicherheitsinformation beispielsweise Nachrichten eines WLAN 4-Wege-Handshake-Protokolls und ermittelt einen dabei ausgehandelten Verkehrssitzungsschlüssel TSK, siehe A5. Dieser wird verwendet, um eine mit diesem Verkehrssitzungsschlüssel TSK geschützte Kommunikation zwischen dem Client 101 und Zugangspunkt 103 Verbindung zu verschlüsseln, siehe M5.

Die so verschlüsselte Nutzdatenübertragung auf der Verbindung 102 kann somit durch die Überwachungsvorrichtung 104 entschlüsselt und überwacht werden. Zusätzlich kann die Überwachungsvorrichtung 106 die über die Verbindung 102 entschlüsselten Nutzdaten gegenüber einer Überwachungsrichtlinie überprüfen und bei Verletzung der Überwachungsrichtlinie ein Alarmsignal bereitstellen, siehe A6.

Die Überwachungsvorrichtung 106 entschlüsselt bzw. überprüft somit Schlüsselvereinbarungsnachrichten und/oder Schlüsselverteilungsnachrichten, die während des Verbindungsaufbaus zwischen dem Client 101 und dem Zugangspunkt 103 ausgetauscht werden, und ermittelt darin enthaltene oder ausgehandelte Verkehrssitzungsschlüssel, die zum kryptographischen Schutz von Nutzdaten verwendet werden.

Die Sicherheitsinformation wird vorzugsweise nur an eine authentisierte und autorisierte Überwachungsvorrichtung 106 bereitgestellt. Die Authentifizierung beziehungsweise Autorisierung der Überwachungsvorrichtung 106 kann beispielsweise durch eine Authentifizierung der Überwachungsvorrichtung 106 beim Authentifizierungsserver 105 erfolgen. Die Überwachungsvorrichtung 106 kann sich jedoch auch gegenüber einer anderen Komponente, z.B. einer Client-Komponente oder einer Zwischenvorrichtungskomponente, authentisieren. Eine Bestätigung der Autorisierung der Überwachungsvorrichtung 106 wird dann dem Authentifizierungsserver 105 bereitgestellt.

Die Sicherheitsinformation kann von der Zwischenvorrichtung 104 auch zeitlich verzögert an die Überwachungsvorrichtung 106 bereitgestellt werden. In einer Variante wird die Sicherheitsinformation von der Zwischenvorrichtung 104 über eine kryptographisch geschützte Verbindung, siehe Verbindung 107 in Figur 1, an die Überwachungsvorrichtung 106 bereitgestellt. Dabei wird die Sicherheitsinformation verschlüsselt und/oder integritätsgeschützt übertragen. Zur Verschlüsselung und/oder Integritätsüberwachung der kryptographisch geschützten Verbindung 107 wird bevorzugt ein öffentlicher Schlüssel des Clients 101 und/oder des Authentifizierungsservers 105 verwendet. Somit ist eine Überwachung der Verbindung 102 zwischen dem Client 101 und dem Zugangspunkt 103, siehe S4 in Figur 5, lückenlos möglich.

Der Authentifizierungsserver 105 und die Zwischenvorrichtung 104 stehen in einer Vertrauensbeziehung zueinander, um eine sichere und vertrauenswürdige Handhabung und Übertragung der Schlüsselinformation M31 zu garantieren. Die Zwischenvorrichtung 104 kann beispielsweise als Authentifizierungsproxy ausgebildet sein, die zusammen mit dem Authentifizierungsserver 105 einer gemeinsamen Netzwerkzone angehören. Diese erste Netzwerkzone, in Figur 5 durch die gestrichelte Linie 108 dargestellt, wird beispielsweise von einem Netzbetreiber betrieben.

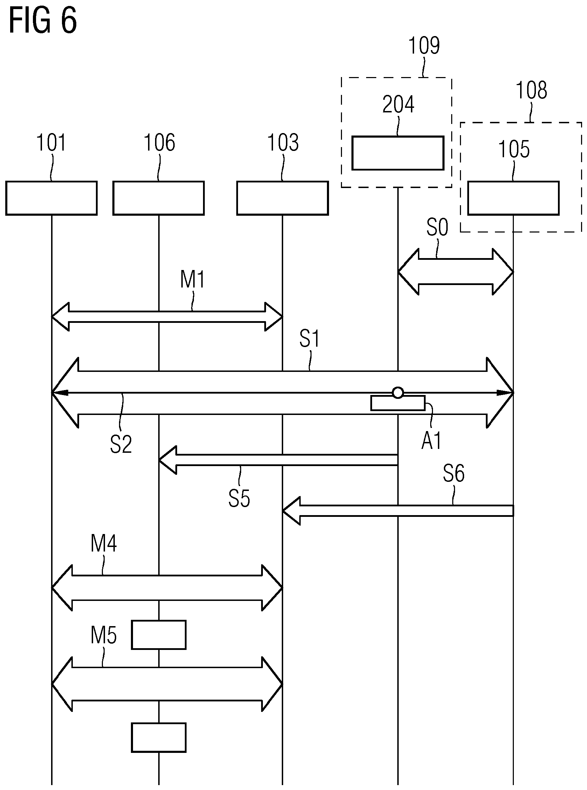

Figur 6 zeigt eine Anordnung zur Überwachung der verschlüsselten Verbindung 102 zwischen Client 101 und Zugangspunkt 103, bei der eine Zwischenvorrichtung 204 in einer zweiten Netzwerkzone 109 angeordnet ist, die von der ersten Netzwerkzone 108, der der Authentifizierungsserver 105 zugeordnet ist, unterschiedlich ist. In einer solchen Anordnung wird im Verfahrensschritt S0 eine Vertrauensbeziehung zwischen der Zwischenvorrichtung 204 und dem Authentifizierungsserver 105 ausgebildet. Beispielsweise kann dies durch eine Authentifizierung der Zwischenvorrichtung 204 beim Authentifizierungsserver 105 erfolgen. Es kann aber auch eine Identifizierung der Zwischenvorrichtung 204 einer weiteren Komponente erfolgen, die nicht Teil der Authentifizierungsinfrastruktur der ersten Netzwerkzone 108 ist. Diese Authentifizierungsinformation liegt bevorzugt dem Authentifizierungsserver vor.

Dies ermöglicht einen vom Netzwerkbetreiber der ersten Netzwerkzone unabhängigen Zugriff auf die ausgehandelte Schlüsselinformation, siehe A1, die im Nachgang zum Schutz des Netzwerkzugangs genutzt wird. Die Zwischenkomponente 204 stellt die Sicherheitsinformation mit Schlüssel- und Verbindungsparametern der Überwachungsvorrichtung 106 bereit, siehe S5. Die Sicherheitsinformation wird insbesondere über eine geschützte Verbindung, beispielsweise über eine TLS-Verbindung oder eine IPsec-Verbindung, zwischen Zwischenvorrichtung 204 und Überwachungsvorrichtung 106 übertragen. Dazu kann insbesondere ein öffentlicher Schlüssel der Überwachungsvorrichtung 106 verwendet werden. Der Authentifizierungsserver 105 stellt in dieser Variante die Sicherheitsinformation oder eine aus der Sicherheitsinformation abgeleitete zweite Sicherheitsinformation dem Zugangspunkt 103 zur Verfügung, siehe S6. Die weiteren in Figur 6 dargestellten Abläufe entsprechen den für Figur 5 beschriebenen Abläufen.

Eine Übertragung, insbesondere eine drahtlose Übertragung, von Steuerdaten zwischen einem Client und einem Zugangspunkt, kann somit überwacht werden, ohne bestehende Netzwerkinfrastruktur, insbesondere den Client 101 und den Zugangspunkt 103, speziell anpassen zu müssen.

Alle beschriebenen und/oder gezeichneten Merkmale der Erfindung können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Überwachung einer verschlüsselten drahtlosen Verbindung (102) zwischen einem Client (101) und einem Zugangspunkt (103) in einem Netzwerk (110), wobei
- ein Erweiterbares Authentifizierungsprotokoll EAP für eine Zugangsauthentifizierung des Clients (101) zum Netzwerk bei einem Authentifizierungsserver (105) verwendet wird (S1), und
- innerhalb des Erweiterbaren Authentifizierungsprotokolls ein Transportschicht-Sicherheits-Protokoll mit key disclosure (EAP-kdTLS) ausgeführt wird (S2), bei dem eine Sicherheitsinformation zum kryptographischen Schutz der drahtlosen Verbindung (102) zwischen einem Client (101) und einem Zugangspunkt (103) einer Zwischenvorrichtung (104) bereitgestellt (A1) und von der Zwischenvorrichtung (104) an eine Überwachungsvorrichtung (106) zur Überwachung der drahtlosen Verbindung (102) übermittelt wird (S3), wobei das Transportschicht-Sicherheits-Protokoll TLS mit Key disclosure ein Multi-Context-TLS Protokoll oder ein TLS Protokoll mit Visibilitätserweiterung oder ein TLS Protokoll mit Rotier-und-Freigabe Funktion TLS-RaR ist.

2. Verfahren nach Anspruch 1, wobei die Sicherheitsinformation in der Zwischenvorrichtung (104) überprüft und an den Zugangspunkt (103) weitergeleitet wird.

3. Verfahren nach einem der vorhergehenden Ansprüche, wobei die Sicherheitsinformation selbst oder eine aus der Sicherheitsinformation abgeleitete zweite Sicherheitsinformation von der Zwischenvorrichtung (104) ermittelt wird und an die Überwachungsvorrichtung (106) zur Überwachung (S4) der drahtlosen Verbindung (102) bereitgestellt wird (S3).

4. Verfahren nach einem der vorhergehenden Ansprüche, wobei die Sicherheitsinformation nur an eine vom Authentifizierungsserver (105) authentisierte und/oder autorisierte Überwachungsvorrichtung (106) bereitgestellt wird.

5. Verfahren nach einem der vorhergehenden Ansprüche, wobei die Sicherheitsinformation von der Zwischenvorrichtung (104) zeitlich verzögert an die Überwachungsvorrichtung (106) bereitgestellt wird.

6. Verfahren nach einem der vorhergehenden Ansprüche, wobei die Sicherheitsinformation über eine kryptographisch geschützte Verbindung (107) von der Zwischenvorrichtung (104) an die Überwachungsvorrichtung (106) bereitgestellt wird.

7. Verfahren nach Anspruch 6, wobei ein öffentlicher Schlüssel des Clients (101) und/oder des Authentifizierungsservers (105), der bei der Zugangsauthentifizierung zum Netzwerk validiert wurde, zur Verschlüsselung und/oder zur Integritätsüberwachung der kryptographisch geschützten Verbindung (107) verwendet wird.

8. Verfahren nach einem der vorhergehenden Ansprüche, wobei über die drahtlose Verbindung (102) geschützt übertragene Schlüsselverteilungsnachrichten und/oder Schlüsselvereinbarungsnachrichten mittels der Sicherheitsinformation von der Überwachungsvorrichtung (106) entschlüsselt werden (A5) und darin enthaltene Verkehrssitzungsschlüssel, die zum kryptographischen Schutz von Nutzdaten verwendet werden, ermittelt werden.

9. Verfahren nach Anspruch 8, wobei mit dem Verkehrssitzungsschlüssel entschlüsselten Nutzdaten gegenüber einer Überwachungsrichtlinie überprüft werden und bei Verletzung der Überwachungsrichtlinie ein Alarm von der Überwachungsvorrichtung (106) bereitgestellt wird.

10. Anordnung zur Überwachung einer verschlüsselten drahtlosen Verbindung (102) zwischen einem Client (101) und einem Zugangspunkt (103) in einem Netzwerk (110), umfassend
- einen Client (101) und einen Authentifizierungsserver (105), die derart ausgebildet sind ein Erweiterbares Authentifizierungsprotokoll EAP zur Zugangsauthentifizierung des Clients (101) zum lokalen Netzwerk zu verwenden und innerhalb des Erweiterbaren Authentifizierungsprotokolls EAP ein Transportschicht-Sicherheits Protokoll TLS mit key disclosure auszuführen, bei dem eine Sicherheitsinformation zum kryptographischen Schutz der drahtlosen Verbindung (102) zwischen einem Client (101) und einem Zugangspunkt (103) einer Zwischenvorrichtung (104) bereitgestellt wird,
- eine Zwischenvorrichtung (104), die derart ausgebildet ist die Sicherheitsinformation von dem Authentifizierungsserver (105) zu empfangen,
und
- eine Überwachungsvorrichtung (106), die derart ausgebildet ist die Sicherheitsinformation von der Zwischenvorrichtung (104) zur Überwachung (S4) der drahtlosen Verbindung (102) zu empfangen, wobei das Transportschicht-Sicherheits-Protokoll TLS mit key disclosure ein Multi-Context-TLS Protokoll oder ein TLS Protokoll mit Visibilitätserweiterung oder ein TLS Protokoll mit Rotier-und-Freigabe Funktion TLS-RaR ist.

11. Anordnung nach Anspruch 10, wobei die Anordnung derart ausgebildet ist, das Verfahren nach Anspruch 1 bis 9 durchzuführen.

12. Anordnung nach Anspruch 10 oder 11, wobei zwischen der Zwischenvorrichtung (104) und dem Authentifizierungsserver (105) eine Vertrauensbeziehung ausgebildet ist.

13. Anordnung nach einem der Ansprüche 10 bis 12, wobei die Zwischenvorrichtung (104) als ein Authentisierungs-Proxy ausgebildet ist, der mit dem Authentifizierungsserver (105) einer ersten Netzwerkzone zugeordnet ist oder wobei die Zwischenvorrichtung (104) einer von einem Authentifizierungsserver unterschiedlichen zweiten Netzwerkzone zugeordnet ist.

14. Computerprogrammprodukt, das direkt in einen Speicher eines oder mehrerer digitalen Computer ladbar ist, umfassend Programmcodeteile, die dazu geeignet sind, die Schritte des Verfahrens nach einem der Ansprüche 1 bis 9 durchzuführen.

## Claims

1. Method for monitoring an encrypted wireless connection (102) between a client (101) and an access point (103) in a network (110), wherein
- an extensible authentication protocol EAP is used (S1) for an authentication of the client (101) for access to the network on an authentication server (105), and
- a transport layer security protocol with key disclosure (EAP-kdTLS) is executed (S2) within the extensible authentication protocol, which involves security information for cryptographically protecting the wireless connection (102) between a client (101) and an access point (103) being provided (A1) to an intermediate apparatus (104) and being transmitted (S3) from the intermediate apparatus (104) to a monitoring apparatus (106) for the purpose of monitoring the wireless connection (102), wherein the transport layer security protocol TLS with key disclosure is a multi-context TLS protocol or a TLS protocol with a visibility extension or a TLS protocol with a rotate and release function TLS-RaR.

2. Method according to Claim 1, wherein the security information is checked in the intermediate apparatus (104) and forwarded to the access point (103).

3. Method according to either of the preceding claims, wherein the security information itself or second security information derived from the security information is ascertained by the intermediate apparatus (104) and is provided (S3) to the monitoring apparatus (106) for the purpose of monitoring (S4) the wireless connection (102).

4. Method according to one of the preceding claims, wherein the security information is provided only to a monitoring apparatus (106) authenticated and/or authorized by the authentication server (105).

5. Method according to one of the preceding claims, wherein the security information is provided to the monitoring apparatus (106) by the intermediate apparatus (104) in delayed fashion.

6. Method according to one of the preceding claims, wherein the security information is provided to the monitoring apparatus (106) by the intermediate apparatus (104) via a cryptographically protected connection (107).

7. Method according to Claim 6, wherein a public key of the client (101) and/or of the authentication server (105) that was validated during the authentication for access to the network is used for encryption and/or for monitoring the integrity of the cryptographically protected connection (107).

8. Method according to one of the preceding claims, wherein key distribution messages and/or key agreement messages transmitted via the wireless connection (102) in protected fashion are decrypted (A5) by the monitoring apparatus (106) by means of the security information, and traffic session keys that said messages contain, which are used for cryptographically protecting payload data, are ascertained.

9. Method according to Claim 8, wherein payload data decrypted by means of the traffic session key are checked with respect to a monitoring guideline, and an alarm is provided by the monitoring apparatus (106) if the monitoring guideline is violated.

10. Arrangement for monitoring an encrypted wireless connection (102) between a client (101) and an access point (103) in a network (110), comprising
- a client (101) and an authentication server (105), which are designed to use an extensible authentication protocol EAP for an authentication of the client (101) for access to the local area network and to execute a transport layer security protocol TLS with key disclosure within the extensible authentication protocol EAP, which involves security information for cryptographically protecting the wireless connection (102) between a client (101) and an access point (103) being provided to an intermediate apparatus (104),
- an intermediate apparatus (104), which is designed to receive the security information from the authentication server (105), and
- a monitoring apparatus (106), which is designed to receive the security information from the intermediate apparatus (104) for the purpose of monitoring (S4) the wireless connection (102), wherein the transport layer security protocol TLS with key disclosure is a multi-context TLS protocol or a TLS protocol with a visibility extension or a TLS protocol with a rotate and release function TLS-RaR.

11. Arrangement according to Claim 10, wherein the arrangement is designed to perform the method according to Claims 1 to 9.

12. Arrangement according to Claim 10 or 11, wherein a relationship of trust is formed between the intermediate apparatus (104) and the authentication server (105).

13. Arrangement according to one of Claims 10 to 12, wherein the intermediate apparatus (104) is in the form of an authentication proxy that is assigned with the authentication server (105) to a first network zone, or wherein the intermediate apparatus (104) is assigned to a different, second, network zone than an authentication server.

14. Computer program product loadable directly into a memory of one or more digital computers, comprising program code parts suitable for performing the steps of the method according to one of Claims 1 to 9.

## Revendications

1. Procédé pour surveiller une liaison chiffrée sans fil (102) entre un client (101) et un point d'accès (103) dans un réseau (110), dans lequel
- un protocole d'authentification extensible EAP est employé (S1) pour une authentification d'accès (105) du client (101) au réseau sur un serveur d'authentification (105), et
- à l'intérieur du protocole d'authentification extensible, un protocole de sécurité de la couche de transport avec divulgation de clé (EAP-kdTLS) est exécuté (S2), dans lequel une information de sécurité pour la protection cryptographique de la liaison sans fil (102) entre un client (101) et un point d'accès (103) est fournie (A1) à un appareil intermédiaire (104), et transmise (S3) de l'appareil intermédiaire (104) à un dispositif de surveillance (106) pour surveiller la liaison sans fil (102), dans lequel le protocole de sécurité de la couche de transport TLS avec divulgation de clé est un protocole TLS multi-contextes ou un protocole TLS avec extension de la visibilité ou un protocole TLS avec fonction de rotation et d'activation TLS-RaR.

2. Procédé selon la revendication 1, dans lequel l'information de sécurité est vérifiée dans l'appareil intermédiaire (104) et transmise au point d'accès (103).

3. Procédé selon l'une des revendications précédentes, dans lequel l'information de sécurité elle-même ou une deuxième information de sécurité dérivée de l'information de sécurité est déterminée par l'appareil intermédiaire (104) et fournie (S3) à l'appareil de surveillance (106) pour surveiller (S4) la liaison sans fil (102).

4. Procédé selon l'une des revendications précédentes, dans lequel l'information de sécurité n'est fournie qu'à un appareil de surveillance (106) authentifié et/ou autorisé par le serveur d'authentification (105).

5. Procédé selon l'une des revendications précédentes, dans lequel l'information de sécurité est fournie à l'appareil de surveillance (106) par l'appareil intermédiaire (104) avec un retard temporel.

6. Procédé selon l'une des revendications précédentes, dans lequel l'information de sécurité est fournie de l'appareil intermédiaire (104) à l'appareil de surveillance (106) par une liaison protégée de manière cryptographique (107).

7. Procédé selon la revendication 6, dans lequel une clé publique du client (101) et/ou du serveur d'authentification (105), qui a été validée lors de l'authentification d'accès au réseau, est employée pour chiffrer et/ou surveiller l'intégrité de la liaison protégée de manière cryptographique (107).

8. Procédé selon l'une des revendications précédentes, dans lequel des messages de distribution de clés et/ou des messages d'accord de clés transférés de manière protégée par le biais de la liaison chiffrée (102) sont déchiffrés (A5) par l'appareil de surveillance (106) au moyen de l'information de sécurité, et des clés de réunion de trafic contenues dedans qui sont employées pour la protection cryptographique des données utiles, sont déterminées.

9. Procédé selon la revendication 8, dans lequel des données utiles déchiffrées avec la clé de réunion de trafic sont vérifiées par rapport à une directive de surveillance et en cas de violation de la directive de surveillance, une alarme est donnée par l'appareil de surveillance (106).

10. Agencement pour surveiller une liaison chiffrée sans fil (102) entre un client (101) et un point d'accès (103) dans un réseau (110), comprenant
- un client (101) et un serveur d'authentification (105) qui sont conçus de façon à employer un protocole d'authentification extensible EAP pour l'authentification d'accès du client (101) au réseau local et pour exécuter à l'intérieur du protocole d'authentification extensible EAP, un protocole de sécurité de la couche de transport TLS avec divulgation de clé, dans lequel une information de sécurité pour la protection cryptographique de la liaison sans fil (102) entre un client (101) et un point d'accès (103) est fournie à un appareil intermédiaire (104),
un appareil intermédiaire (104) qui est conçu pour recevoir l'information de sécurité du serveur d'authentification (105),
et
- un dispositif de surveillance (106) qui est conçu pour recevoir l'information de sécurité de l'appareil intermédiaire (104) pour surveiller (S4) la liaison sans fil (102), dans lequel le protocole de sécurité de la couche de transport TLS avec divulgation de clé est un protocole TLS multi-contextes ou un protocole TLS avec extension de la visibilité ou un protocole TLS avec fonction de rotation et d'activation TLS-RaR.

11. Agencement selon la revendication 10, dans lequel l'agencement est conçu pour exécuter le procédé selon les revendications 1 à 9.

12. Agencement selon la revendication 10 ou 11, dans lequel une relation de confiance est établie entre l'appareil intermédiaire (104) et le serveur d'authentification (105).

13. Agencement selon l'une des revendications 10 à 12, dans lequel l'appareil intermédiaire (104) est conçu en tant qu'un proxy d'authentification qui, avec le serveur d'authentification (105) est attribué à une première zone de réseau, ou dans lequel l'appareil intermédiaire (104) est attribué à une deuxième zone de réseau différente d'un serveur d'authentification.

14. Produit-programme informatique qui peut être chargé directement dans une mémoire d'un ou plusieurs ordinateur(s) numérique(s), comprenant des parties de code de programme qui sont appropriées pour exécuter les étapes du procédé selon l'une des revendications 1 à 9.
